# DEMANDE DE BREVET EUROPEEN

(11) **EP 3 343 410 A1**
(43) Date de publication de la demande: **04.07.2018**
(21) Numéro de dépôt: 17211001.7
(22) Date de dépôt: 28.12.2017
(51) Int. Cl.: G06F 17/30

(54) **DISPOSITIF DE TRAITEMENT DE FLUX DE DONNÉES À GRANDE ÉCHELLE**

(30) Priorité: 30.12.2016 FR 1663537
(71) Demandeur: Atos Integration, 95870 Bezons (FR)
(72) Inventeur: KEPEKLIAN, Gabriel, 95250 BEAUCHAMP (FR)
(74) Mandataire: Debay, Yves

(57) **Abrégé**

La présente invention concerne un dispositif de traitement de flux de données à grande échelle (big data), comportant une base de connaissance, un ensemble matériel et logiciel constituant un dispositif frontal de communication, permettant de capter les flux du milieu extérieur et le cas échéant de restituer des données vers ce milieu, le frontal délivrant les flux à une plateforme pour y subir différents traitements, des traces sont recueillies et stockées dans une architecture de stockage et de mémorisation lors de l'exécution des opérations de traitement, la plateforme produisant des données qui alimentent un dispositif décideur comportant un ensemble matériel et logiciel définissant des règles de décisions permettant soit de déclencher des actions, soit d'initier des rétroactions vers le dispositif frontal de communication soit vers la base de connaissance dudit dispositif de traitement.

## Description

### DOMAINE TECHNIQUE DE L'INVENTION

La présente invention se rapporte au domaine du traitement de données et plus spécifiquement à un dispositif pour le traitement de volumes de données importants.

### ARRIERE-PLAN TECHNOLOGIQUE DE L'INVENTION

Les données constituent partout la matière première de notre monde, aujourd'hui définitivement numérique. Le déluge informationnel crée de nouvelles opportunités, par exemple, de business. Ces données de masses redéfinissent la façon de créer la connaissance scientifique et offrent aussi aux entreprises de nouveaux leviers de croissance.

Le croisement des flots de données qui irriguent désormais un grand nombre de secteurs, en particulier les domaines de l'économie, doit permettre d'accéder à une information de nature systémique inaccessible dans chaque flux de données pris isolément. Le Web sémantique, offre un cadre pour mettre en oeuvre ce croisement.

Les standards du web sémantique commencent à être bien diffusés et stabilisés (RDF, OWL pour la représentation de données et métadonnées, ainsi que les protocoles pour les échanges, essentiellement HTTP). Ils ont été créés pour faciliter l'interopérabilité et l'échange des données. Le Web est devenu effectivement la source de données privilégiée et le lieu des échanges les plus dynamiques. La mise à disposition et la promotion des données publiques ouvertes ou semi-ouvertes, leur combinaison avec les données industrielles, les outils pour les exploiter font progressivement émerger plus d'un levier important pour dynamiser, par exemple, le secteur économique.

Le travail de collecte, d'intégration, d'analyse et d'utilisation, de visualisation des données se systématise chez de nombreux acteurs. Il concerne aujourd'hui en grande partie des données « froides » ou évoluant peu dans le temps. Mais un nouvel intérêt se manifeste pour les données « chaudes », donc proche du temps réel, qui posent de nouveaux problèmes et demandent de nouvelles approches.

Certains composants ou outils pour le traitement des flux de données, Open Source ou commerciaux, existent déjà. C'est le cas, par exemple, des triple stores et des moteurs d'exécution de requêtes SPARQL (langage de requêtes).

Néanmoins, avec les volumes actuels des flux de données, leur nombre et leur variété, les techniques et les outils actuels ne sont, plus en mesure de répondre aux exigences des utilisateurs.

### DESCRIPTION GENERALE DE L'INVENTION

La présente invention a pour but de pallier certains inconvénients de l'art antérieur concernant la gestion et le traitement de flux de données importants.

Ce but est atteint par un dispositif de traitement de flux de données à grande échelle (big data), comportant une base de connaissance, un ensemble matériel et logiciel constituant un dispositif frontal de communication, permettant de capter les flux du milieu extérieur et le cas échéant de restituer des données vers ce milieu, le frontal délivrant les flux à une plateforme pour y subir différents traitements, des traces étant recueillies et stockées dans une architecture de stockage et de mémorisation lors de l'exécution des opérations de traitement, la plateforme produit des données qui alimentent un dispositif décideur comportant un ensemble matériel et logiciel définissant des règles de décisions permettant soit de déclencher des actions, soit d'initier des rétroactions vers le dispositif frontal de communication ou vers la base de connaissance.

Selon une autre particularité, les différents traitements comprennent la sémantisation du flux, ou la création d'un résumé, ou le croisement d'au moins deux flux ou l'interconnexion de plusieurs flux entre eux.

Selon une autre particularité, la plateforme comporte une pluralité de « smart'op » qui sont des processus de traitement de flux, ces processus étant par exemple scriptés, via un moyen de scriptage, pour produire des données alimentant le dispositif décideur.

Selon une autre particularité, la mémorisation des traces d'activité dans l'architecture de stockage permet à la plateforme en accédant à ces traces d'activité d'effectuer des répétitions de jeux éventuels ou des traitements en temps différés.

Selon une autre particularité, la sémantisation des flux se conforme à une ontologie de description des flux.

Selon une autre particularité, l'interconnexion des flux peut inclure des raisonnements sémantiques.

Selon une autre particularité, toutes les opérations auxquelles sont soumis les flux concourent à la production de données.

Selon une autre particularité, les données peuvent être des alertes ou des singularités résultant des raisonnements effectués sur les flux.

Selon une autre particularité, la base de connaissances contient les informations représentant la connaissance du milieu extérieur et comporte la description des capteurs et de l'infrastructure qui les supporte.

Selon une autre particularité, ces informations constituant la connaissance peuvent être modifiées par une rétroaction déclenchée par des règles de décisions (logées dans le « décideur»).

### DESCRIPTION DES FIGURES ILLUSTRATIVES

D'autres particularités et avantages de la présente invention apparaîtront plus clairement à la lecture de la description ci-après, faite en référence aux dessins annexés, dans lesquels:

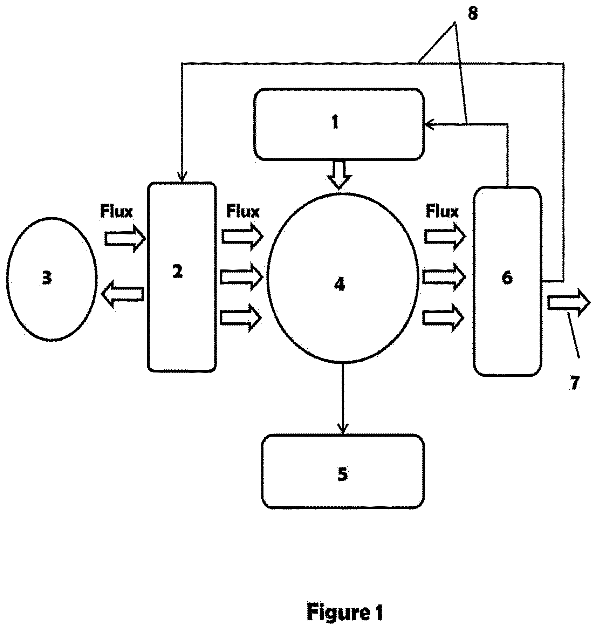

- La figure 1 représente le schéma d'un système de traitement de flux de données comprenant au moins un dispositif et une plateforme de traitement de flux, selon un mode de réalisation;

### DESCRIPTION DES MODES DE REALISATION PREFERES DE L'INVENTION

La présente invention concerne un dispositif pour le traitement d'importants flux de données.

Dans certains modes de réalisation, le dispositif de traitement de flux de données à grande échelle (big data), comporte une base de connaissance (1, figure 1), un ensemble matériel et logiciel constituant un dispositif frontal de communication (2), permettant de capter les flux du milieu extérieur (3) et le cas échéant de restituer des données vers ce milieu, le frontal délivrant les flux à une plateforme (4) pour y subir différents traitements, des traces d'activité sont recueillies et stockées dans une architecture de stockage et de mémorisation (5) lors de l'exécution des opérations de traitement, la plateforme (4) produisant des données qui alimentent un dispositif décideur (6) comportant un ensemble matériel et logiciel définissant des règles de décision permettant soit de déclencher des actions (7), soit d'initier des rétroactions (8) vers le dispositif frontal de communication (2) ou vers la base de connaissance (1) dudit dispositif.

Le dispositif de traitement de flux de données et la plateforme (4) permettent aux utilisateurs, de gérer efficacement leurs propres flux de données et ceux produits dans leur domaine d'activité par d'autres acteurs (partenaires, fournisseurs, clients, organismes, agences, etc.). Ces données comprennent aussi des données ouvertes (Open Data), liées (Linked Open Data) ou non, qui sont produites par des communautés internationales ou des organisations privées.

Le langage ou format ou modèle utilisé, pour la description des données, dans la plateforme (4) est, de préférence le RDF (Resource Description Framework). Le modèle (de graphe) RDF permet de décrire de façon formelle les ressources Web et leurs métadonnées, de façon à permettre le traitement automatique de telles descriptions. Un document structuré en RDF est un ensemble de triplets. Un triplet RDF est une association (sujet, prédicat, objet):
- le « sujet » représente la ressource à décrire ;
- le « prédicat » représente un type de propriété applicable à cette ressource ;
- l' « objet » représente une donnée ou une autre ressource, c'est la valeur de la propriété.
Le sujet, et l'objet dans le cas où c'est une ressource, peuvent être identifiés par une URI (identifiant de ressource uniforme) ou être des noeuds anonymes. Le prédicat est nécessairement identifié par une URI.

Les documents RDF peuvent être écrits en différentes syntaxes, y compris en XML. Mais RDF en soi n'est pas un dialecte XML. Il est possible d'avoir recours à d'autres syntaxes pour exprimer les triplets. RDF est simplement une structure de données constituée de noeuds et organisée en graphe. Bien que RDF/XML-sa version XML proposée par le W3C (World Wide Web Consortium)-ne soit qu'une syntaxe (ou sérialisation) du modèle, elle est souvent appelée RDF. Un abus de langage désigne à la fois le graphe de triplets et la présentation XML qui lui est associée.

Un document RDF ainsi formé correspond à un multi-graphe orienté étiqueté. Chaque triplet correspond alors à un arc orienté dont le label est le prédicat, le noeud source le sujet et le noeud cible l'objet.

La description de documents et ou données en RDF repose, en général, sur une ou un ensemble d'ontologie(s). Une ontologie est un ensemble structuré des termes et concepts représentant le sens d'un champ d'informations, que ce soit par les métadonnées d'un espace de noms, ou les éléments d'un domaine de connaissances. L'ontologie constitue en soi un modèle de données représentatif d'un ensemble de concepts dans un domaine, ainsi que des relations entre ces concepts. Elle est employée pour raisonner à propos des objets du domaine concerné.

Les concepts sont organisés dans un graphe et sont liés les uns aux autres par des relations taxinomiques (hiérarchisation des concepts) d'une part, et sémantiques d'autre part.

Cette définition rend possible l'écriture de langages destinés à implémenter des ontologies. Pour construire une ontologie, on dispose d'au moins trois de ces notions :
- détermination des agents passifs ou actifs ;
- leurs conditions fonctionnelles et contextuelles ;
- leurs transformations possibles vers des objectifs limités.

Pour modéliser une ontologie, on utilisera ces outils pour:
- raffiner les vocabulaires et notions adjacentes ;
- décomposer en catégories et autres sujets ;
- prédiquer afin de connaître les transformations adjacentes et orienter vers les objectifs internes ;
- relativiser afin d'englober des concepts ;
- similariser afin de réduire à des bases totalement distinctes;
- instancier afin de reproduire l'ensemble d'une « branche » vers une autre ontologie.

Les ontologies sont employées dans l'intelligence artificielle, le Web sémantique, le génie logiciel, l'informatique biomédicale ou encore l'architecture de l'information comme une forme de représentation de la connaissance au sujet d'un monde ou d'une certaine partie de ce monde. Les ontologies décrivent généralement des:
- individus, constituant les objets de base ;
- classes: constituant des ensembles, collections, ou types d'objets1 ;
- attributs: constitués par des propriétés, fonctionnalités, caractéristiques ou paramètres que les objets peuvent posséder et partager ;
- relations, constituant les liens que les objets peuvent avoir entre eux ;
- événements représentant les changements subis par des attributs ou des relations;
- métaclasse (web sémantique), constituant des collections de classes qui partagent certaines caractéristiques

Dans certains modes de réalisation, les différents traitements comprennent la sémantisation du flux, ou la création d'un résumé, ou le croisement d'au moins deux flux ou l'interconnexion de plusieurs flux entre eux.

Dans certains modes de réalisation, la plateforme (4) comporte une pluralité de « smart'op » qui sont des processus de traitement de flux, ces processus étant scriptés, via un moyen de scriptage, par exemple et de manière non-limitative un DSL (langage dédié à un domaine), pour produire des données alimentant le dispositif décideur (6).

Par scriptage, on entend la programmation à l'aide de scripts. Un script est défini comme un programme en langage interprété.

Dans certains modes de réalisation, la mémorisation des traces d'activité dans l'architecture de stockage permet à la plateforme (4) en accédant à ces traces d'effectuer des répétitions de jeux éventuels ou des traitements en temps différés.

Par répétition de jeux ou rejeu, on entend l'opération qui consiste à faire « refaire » un traitement précédemment effectué et dont on a conservé les traces d'activité.

Dans certains modes de réalisation, la sémantisation des flux se conforme à une ontologie de description des flux.

Dans certains modes de réalisation, l'interconnexion des flux peut inclure des raisonnements sémantiques.

Dans certains modes de réalisation, toutes les opérations auxquelles sont soumis les flux (traversant la plateforme (4)), concourent à la production de données (flux en entrée du « décideur » (6), voir figure 1).

Dans certains modes de réalisation, les données peuvent être des alertes ou des singularités résultant des raisonnements effectués sur les flux.

Dans certains modes de réalisation, la base de connaissances contient les informations représentant la connaissance du milieu extérieur et comporte la description des capteurs et de l'infrastructure qui les supporte.

Dans certains modes de réalisation, ces informations constituant la connaissance peuvent être modifiées par une rétroaction (8) déclenchée par des règles de décisions (logées dans le «décideur» (6)). Par exemple et de manière non-limitative, le «décideur» (6), découvrant qu'un capteur est défectueux, met à jour la base de connaissances. Le «décideur» (6) peut aussi transmettre des données au milieu extérieur (3) en communiquant avec le « frontal » (2), comme représenté sur la figure 1.

Dans certains modes de réalisation, la plateforme (4) a une architecture modulaire, pour supporter l'ajout ou le remplacement de (nouveaux) composants sans recompilation, et permettre le déploiement sur un parc de machines virtuelles banalisées (« cloud-ready »). Ladite plateforme (4) est modularisée au moyen de couches d'abstractions permettant d'encapsuler tous les accès aux services du système d'exploitation (système de fichiers), de stockage (base de données, triple store RDF...) ou d'échange (bus de messagerie).

Cette architecture de plateforme, modulaire, peut s'appuyer sur les standards du marché pour s'insérer dans les systèmes des utilisateurs, en particulier :
- La plate-forme Java et son écosystème. Les plateformes basées sur Java bénéficient de nombreux avantages. Le moteur d'exécution, fonctionnant sur plusieurs systèmes d'exploitation, les développements en Java héritent notamment d'une indépendance de la plateforme (4) et d'une portabilité du code qui s'exécute alors de façon identique sur chacune d'entre elles. C'est un environnement où les bibliothèques de fonction et les frameworks disponibles en open source sont nombreux, cela facilite les développements. Au-delà du langage de programmation, Java est avant tout une plate-forme de déploiement (la machine virtuelle Java, la librairie et les serveurs d'application de la version entreprise (Java EE) qui supporte plusieurs types de programmation: impérative (Java), dynamique/scriptée (Groovy, JRuby...) et fonctionnelle (Scala, Closure...)
- Les normes du W3C (World Wide Web Consortium), que ce soit au niveau modélisation des données (RDF, XML), de la formulation des requêtes (requêtage par le langage SPARQL), de l'infrastructure (protocole HTTP, modèle REST) ou de la présentation (HTML 5, CSS)

Dans certains modes de réalisation, un remplacement des implémentations desdites abstractions, permet de passer d'implémentations simples adaptées au développement (système de fichier local, triple store en mémoire, observateurs d'événements) à d'autres focalisées sur le déploiement à grande échelle (parc de machines virtuelles, cluster ou ferme de serveurs): systèmes de fichiers distribués de type « Grid » (MongoDB, Infinispan...), triple store distribué ou en cluster, bus de messagerie JMS ou AMQP, etc.,

Dans certains modes de réalisation, l'architecture de la plateforme (4) permet d'adapter le déploiement du système à la volumétrie cible mais aussi de la faire évoluer en cas d'évolution, par simple ajout de machines virtuelles si les composants sélectionnés le permettent ou, en remplaçant les composants limitant la scalabilité.

Un autre aspect de la scalabilité du système concerne la gestion des flux réseau et l'optimisation du trafic vers ou à partir du système. L'utilisation du modèle REST (REpresentational State Transfer) pour la fourniture de services aux applications et utilisateurs permet d'optimiser l'utilisation de l'infrastructure réseau, tant côté serveur que côté client, par exemple au travers des directives de gestion des caches (serveurs, réseaux (proxys) et client) mais aussi d'éviter les requêtes inutiles de type revalidation de contenu.

De même, une gestion fine de la négociation de contenu permet d'optimiser les échanges en minimisant voire en supprimant le nombre de redirections nécessaires pour guider l'utilisateur vers la ressource fournissant un contenu adapté à ses contraintes/capacités (types MIME).
L'architecture peut supporter les interfaces nécessaires à cette optimisation des flux échangés.

Au-delà des aspects techniques, cette tâche permet d'établir les règles de routage et de distribution des évènements concernant les flux de manière à automatiser et optimiser la distribution des traitements en fonction de la topologie (architecture) de la plateforme (4) et de la capacité de traitement de chaque instance de smart'op la composant. Ladite architecture permet en outre une distribution dynamique et auto-adaptative des traitements, capable de prendre en compte des évènements tels que la disparition d'un noeud (recovery) et sa remise en service, voire, optionnellement, l'introduction d'un nouveau noeud (scalabilité à chaud).

Dans certains modes de réalisation, le langage de requête SPARQL est étendu pour effectuer des résumés de flux de données ou implémenter des fonctions d'oubli permettant d'historiser les flux de données avec une granularité variable en fonction du temps et en assurant un espace de stockage limité.

Les résumés permettent également de spécifier et implémenter des opérateurs de filtrage sémantique (car appliqués à des données sémantisées) qui utilisent en entrée le contexte de l'utilisateur qui se traduit par son profil, ses droits d'accès aux données, sa géolocalisation, ses préférences, son terminal ainsi que son environnement (temps, saison, etc.)

Les données dynamiques récupérées des différents capteurs et autres flux sont sémantisées. Cette sémantisation se traduit par une conversion de ces données en triplets RDF agrémentés d'une dimension temporelle qui caractérise l'arrivée quasi continue de ces flux.

Ainsi, l'extension du langage SPARQL, en y intégrant des notions telles que la fenêtre temporelle, permet de faire des requêtes, filtrer ou raisonner sur ces flux sémantisés.

Lorsqu'un système nécessite un traitement rapide et intelligent de données volumineuses qui arrivent en continu, il devient très coûteux et parfois redondant ou impossible de stocker la totalité des flux avant leur traitement. Il est donc nécessaire de traiter à la volée les données sémantisées et de ne stocker que celles qui sont pertinentes en réalisant des résumés (par exemple extraire un échantillon représentatif du flux par des approches statistiques).

Dans certains modes de réalisation, le langage SPARQL est étendu en introduisant la notion de fenêtre temporelle adaptable (portion définie d'un flux) et des opérateurs spécifiques au traitement de flux. Les requêtes traitant les données doivent s'adapter au débit d'arrivée des données dynamiques et s'évaluer continuellement afin de tenir compte du caractère évolutif du flux. La sémantique des requêtes SPARQL permet, ainsi, les traitements basés sur le temps ou l'ordre d'arrivée des données.

Dans certains modes de réalisation, le langage SPARQL étendu permet de mêler des données pouvant être soit statiques, soit dynamiques et temporelles en les interconnectant, quel que soit leur nombre, leur source ou leur qualité.

Dans le contexte du Web Sémantique, les faits stockés dans les bases de connaissances ne sont naturellement pas ordonnés. Or l'environnement du streaming, avec sa notion de fenêtre temporelle du traitement des données, impose cette prise en charge. Les mécanismes de gestion et représentation des faits entrants et de raisonnement sont, donc, adaptés pour ordonner lesdits faits. Les considérations de la vélocité et de la volumétrie des données impliquent une optimisation des opérations précitées. Ainsi il est indispensable de recevoir des données brutes, de les sémantiser et de les exploiter au sein d'un mécanisme d'inférence dans un temps restreint et ce même si les données arrivent à une très grande vitesse et en volumes très importants. La prise en compte de ces deux facteurs avec la contrainte temporelle de la fenêtre d'analyse des flux est assurée par un système dynamique pour leur stockage intermédiaire. Ainsi, dans certaine situation, les flux pourront être sauvegardés uniquement en mémoire principale alors que dans d'autres situations, il sera certainement nécessaire de les persister, même temporairement, en mémoire secondaire.

Pour l'exploitation des bases de données du type clé/valeur qui sont adaptées à un stockage en mémoire principale et offrent un haut niveau de performance, il convient d'adapter le modèle de triplets RDF à l'approche clé/valeur pris dans sa généralité.

Pour la conversion des données en triplets RDF, une première approche dite « direct mapping » permet de générer automatiquement du RDF à partir des noms de tables pour les classes et des noms de colonnes pour les propriétés. Cette approche permet d'obtenir rapidement du RDF à partir d'une base de données relationnelle, mais sans utiliser de vocabulaire.

L'autre approche fournit le langage de mapping R2RML permettant d'associer des termes de vocabulaire au schéma de la base de données. Dans le cas de XML, une transformation générique XSLT peut être réalisée pour produire du RDF à partir d'un large éventail de documents XML

La visualisation de données (dataviz) est une des clés de leur utilisation. Elle permet de comprendre, d'analyser, de suivre, de détecter les éléments clé des données. Par-dessus tout, elle permet à l'utilisateur d'interagir avec la donnée, de la percevoir de façon physique. De nombreux travaux scientifiques sur la visualisation de données ont été et sont conduits dans les laboratoires de recherche. De nombreux composants open source permettent à un public d'expert ou de semi-expert de s'en saisir et de communiquer leur point de vue sur les données.

Par exemple, Le journalisme de données (« data journalism» en anglais, qui est un mouvement visant à renouveler le journalisme par l'exploitation de données statistiques et la mise à disposition de celles-ci au public) est en plein essor en raison de deux facteurs majeurs. Premièrement, la mise à disposition au public des données (Open Data) permettant d'accéder rapidement à des données de confiance. Une partie de ces données est accessible sous forme de flux mais ce mouvement tend à s'agrandir grâce à l'arrivée de l'«internet des objets» et des villes intelligentes («smart cities» en anglais). Ceci permettra l'accès aux données en flux de données issues de capteurs ou autres objets communicants. Deuxièmement, la capacité à mettre en oeuvre des visualisations séduisantes a permis de rendre le discours et l'argumentation plus claire et plus parlante. La représentation visuelle de données statiques ou relativement statique a atteint un premier degré de maturité. L'utilisation du langage SPARQL étendu permet à la plateforme (4) modulaire de traiter également la visualisation des données dynamiques et des flux sémantisés.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles ou que la combinaison ne fournisse pas une solution à au moins un des problèmes techniques mentionnés dans la présente demande. De plus, les caractéristiques techniques décrites dans un mode de réalisation donné peuvent être isolées des autres caractéristiques de ce mode à moins que l'inverse ne soit explicitement mentionné.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Dispositif de traitement de flux de données à grande échelle (big data), comportant une base de connaissance (1), un ensemble matériel et logiciel constituant un dispositif frontal de communication (2), permettant de capter les flux du milieu extérieur (3) et le cas échéant de restituer des données vers ce milieu (3), le frontal délivrant les flux à une plateforme (4) pour y subir différents traitements, des traces étant recueillies et stockées dans une architecture de stockage et de mémorisation (5) lors de l'exécution des opérations de traitement, le dispositif de traitement étant **caractérisé en ce que** la plateforme (4) produit des données qui alimentent un dispositif décideur (6) comportant un ensemble matériel et logiciel définissant des règles de décision permettant soit de déclencher des actions (7), soit d'initier des rétroactions (8) vers le dispositif frontal de communication (2) ou vers la base de connaissance (1) dudit dispositif de traitement.

2. Dispositif selon la revendication 1, **caractérisé en ce que** les différents traitements comprennent la sémantisation du flux, ou la création d'un résumé, ou le croisement d'au moins deux flux ou l'interconnexion de plusieurs flux entre eux.

3. Dispositif selon la revendication 1 ou 2 **caractérisé en ce que** la plateforme (4) comporte une pluralité de « smart'op » qui sont des processus de traitement de flux, ces processus étant scriptés, via un moyen de scriptage, pour produire des données alimentant le dispositif décideur (6).

4. Dispositif selon la revendication 1 **caractérisé en ce que** la mémorisation des traces dans l'architecture de stockage permet à la plateforme (4) en accédant à ces traces d'effectuer des répétitions de jeux éventuels ou des traitements en temps différés.

5. Dispositif selon la revendication 2 **caractérisé en ce que** la sémantisation des flux se conforme à une ontologie de description des flux.

6. Dispositif selon la revendication 2 **caractérisé en ce que** l'interconnexion des flux peut inclure des raisonnements sémantiques.

7. Dispositif selon une des revendications 1 à 6 **caractérisé en ce que** toutes les opérations auxquelles sont soumis les flux concourent à la production de données.

8. Dispositif selon une des revendications 1 à 7, **caractérisé en ce que** les données peuvent être des alertes ou des singularités résultant des raisonnements effectués sur les flux.

9. Dispositif selon la revendication 1, **caractérisé en ce que** la base de connaissances (1) contient les informations représentant la connaissance du milieu extérieur (3) et comporte la description des capteurs et de l'infrastructure qui les supporte.

10. Dispositif selon la revendication 9, **caractérisé en ce que** ces informations constituant la connaissance peuvent être modifiées par une rétroaction (8) déclenchée par des règles de décisions (logées dans le « décideur» (6)).

11. Dispositif selon la revendication 1, **caractérisé en ce que** la plateforme (4) a une architecture modulaire pour supporter l'ajout ou le remplacement de composants sans recompilation, et permettre le déploiement sur un parc de machines virtuelles banalisées, ladite plateforme (4) étant modularisée au moyen de couches d'abstractions permettant d'encapsuler tous les accès aux services du système d'exploitation, de stockage ou d'échange.

12. Dispositif selon la revendication 11, **caractérisé en ce qu'**un remplacement des implémentations desdites abstractions, permet de passer d'implémentations simples adaptées au développement à d'autres focalisées sur le déploiement à grande échelle.

13. Dispositif selon la revendication 1, **caractérisé en ce que** l'architecture de la plateforme (4) permet d'adapter le déploiement du système à la volumétrie cible et de la faire évoluer en cas d'évolution, par simple ajout de machines virtuelles si les composants sélectionnés le permettent ou, en remplaçant les composants limitant la scalabilité.

14. Dispositif selon la revendication 1, **caractérisé en ce que** le langage de requête SPARQL est étendu pour effectuer des résumés de flux de données ou implémenter des fonctions d'oubli permettant d'historiser les flux de données avec une granularité variable en fonction du temps et en assurant un espace de stockage limité.

15. Dispositif selon la revendication 14, **caractérisé en ce que** le langage SPARQL est étendu en introduisant la notion de fenêtre temporelle adaptable et des opérateurs spécifiques au traitement de flux, les requêtes traitant les données étant adaptées au débit d'arrivée des données dynamiques et s'évaluant continuellement afin de tenir compte du caractère évolutif du flux, la sémantique des requêtes SPARQL permettant les traitements basés sur le temps ou l'ordre d'arrivée des données.

16. Dispositif selon l'une des revendications 14 ou 15, **caractérisé en ce que** le langage SPARQL étendu permet de mêler des données pouvant être soit statiques, soit dynamiques et temporelles en les interconnectant, quel que soit leur nombre, leurs sources ou leurs qualités.
